# FASCICULE DE BREVET EUROPEEN

(11) **EP 1 745 242 B1**
(45) Date de publication et mention de la délivrance du brevet: **04.08.2010**
(21) Numéro de dépôt: 05771225.9
(22) Date de dépôt: 13.05.2005
(51) Int. Cl.: F17D 3/18

(54) **COUPE-CIRCUIT POUR CANALISATION DE FLUIDE LIQUIDE OU GAZEUX**
SCHUTZSCHALTER FÜR EINE FLÜSSIGKEITS- ODER GASLEITUNG
CIRCUIT BREAKER FOR A LIQUID FLUID OR GAS LINE

(30) Priorité: 14.05.2004 FR 0405265
(43) Date de publication de la demande: 24.01.2007
(73) Titulaire: Hydrelis, 59000 Lille (FR)
(72) Inventeur: SARTORIUS, Thierry, F-62152 Hardelot (FR)
(74) Mandataire: Robert, Jean-Pierre
(86) Numéro de dépôt international: PCT/FR2005/001200
(87) Numéro de publication internationale: WO 2005/116517

(56) Documents cités:
- WO-A-2004/046656
- FR-A- 2 646 234
- FR-A- 2 847 339

## Description

L'invention concerne un appareil de sécurité formant coupe-circuit pour une canalisation de fluide liquide ou gazeux.

Il existe de nombreux procédés et appareils pour détecter un débit de fluide dans une canalisation afin de le mesurer pour le comptage d'une consommation, pour la surveillance de sa normalité par rapport à un modèle d'écoulement (soit en débit, soit en durée, soit en volume...) et pour interrompre cette canalisation au moyen d'un organe d'obturation si une anormalité survient (signe le plus fréquent d'une fuite de la canalisation).

Tous les appareils connus mettent en oeuvre une unité de traitement et d'interprétation d'un signal issu d'un capteur direct ou indirect du débit du fluide circulant dans la canalisation, comprenant un logiciel mis en oeuvre par un micro-ordinateur ou un microcontrôleur, lequel logiciel peut être configuré par l'utilisateur. En général, cette partie électronique des appareils comporte un afficheur des valeurs relevées de volume ou débit de fluide circulant dans la canalisation et un organe d'alarme lorsque des valeurs critiques sont atteintes. Certains comportent en parallèle à ces organes d'alarme des organes de coupure de la canalisation, le plus souvent formés par des électrovannes donc à commande électrique dont l'énergie provient d'un réseau auquel l'électrovanne est reliée. Un exemple de cet état de la technique est constitué par le document FR-2 690 525.

On a pensé, avant l'invention, réaliser un coupe circuit temporisé pour interrompre un débit anormalement long, signe d'un dysfonctionnement de l'installation. Le document DE 28 05 908 illustre un mode de réalisation entièrement mécanique de ce coupe-circuit qui présente cependant des limites dans son utilisation tenant notamment à la mise en oeuvre de ressorts dont les caractéristiques varient avec le temps. Ce document décrit également une autre réalisation dans laquelle une turbine est actionnée par le débit du fluide dans la canalisation, cette turbine émettant un signal dans une unité de puissance connectée au réseau d'alimentation électrique par exemple d'une maison et susceptible de piloter une électrovanne. L'avantage de cette version réside dans la possibilité de réaliser une surveillance plus fine et donc des déclenchements du coupe-circuit en réponse à des causes plus variées. Le document WO 2004/046656 montre un autre type de coupe-circuit.

On mentionnera enfin le document FR 2 646 234 qui décrit un appareil combinant un compteur et une vanne commandée reliés par télécomptage et télécommande à un organisme de gestion de la consommation de fluide.

Par l'invention, on souhaite assurer une fonction de coupe-circuit pour une canalisation de fluide au moyen d'un appareil d'usage domestique qui possède à la fois la simplicité de fonctionnement d'une version entièrement mécanique et l'étendue des conditions de déclenchement d'une version électromagnétique sans présenter des inconvénients de chacune d'elles.

A cet effet l'invention a donc pour objet un coupe-circuit pour canalisation de fluide liquide ou gazeux comprenant :
- une chambre de détection de débit avec un orifice d'entrée, un orifice de sortie et une turbine située entre ces deux orifices,
- un organe d'obturation d'au moins l'un des deux orifices, cet organe étant mobile entre une première position d'ouverture du canal et une seconde position de fermeture de ce dernier,
- des moyens comprenant un levier de manoeuvre de l'organe d'obturation pour le faire passer de l'une vers l'autre de ses positions et des moyens de maintien de cet organe dans l'une et l'autre de ses positions,
- un détecteur de rotation de la turbine susdite émettant un signal électrique significatif de la grandeur d'au moins un paramètre de cette rotation,
- des moyens électroniques d'interprétation de ce signal formant moyens de commande de la neutralisation d'une ventouse magnétique de maintien du levier de manoeuvre manuelle de l'organe d'obturation dans sa position de fermeture, coupe-circuit dans lequel d'une part la chambre de détection, le canal et l'organe d'obturation sont contenus dans un corps étanche possédant des moyens pour son insertion dans une canalisation de fluide et dans lequel d'autre part, le détecteur de rotation de la turbine, les moyens électroniques d'interprétation du signal et la ventouse magnétique avec un enroulement de neutralisation de son champ magnétique permanent sont solidaires d'un support et forment une unité rapportée sur une surface du corps, laquelle unité comporte également une source d'alimentation électrique de l'enroulement et des moyens électroniques.

En plus des avantages précités, cette disposition permet une maintenance particulièrement aisée puisque les deux familles de composants mécaniques et électriques sont totalement séparés et d'accès indépendant.

Dans un mode de réalisation de l'invention, le support susdit est une plaque plane, le corps comportant une surface extérieure plane de fixation de cette plaque qui est perpendiculaire à l'axe de la turbine logé dans la chambre de détection.

Dans ce mode de réalisation le corps et le support sont surmontés d'un capot de couverture rapporté sur le corps. Dans une variante enfin le support et le capot sont solidaires et forment ensemble un boîtier rapporté sur le corps susdit.

D'autres caractéristiques et avantages de l'invention ressortiront de la description donnée ci-après d'un de ses modes de réalisation.

Il sera fait référence aux dessins annexés parmi lesquels :
- la figure 1 illustre par une vue extérieure le coupe-circuit de l'invention,
- la figure 2 est une vue partielle de ce coupe-circuit mettant en exergue des moyens spécifiques de l'invention.

En se reportant à ces figures, on constate que le coupe circuit 1 de l'invention comporte un corps sensiblement parallélépipédique 2 inférieur qui peut être inséré dans une canalisation de fluide entre deux tronçons 3a et 3b de celle-ci. A l'intérieur du corps 2 et de manière connue, la canalisation débouche dans une chambre de détection 3 du débit de fluide circulant dans la canalisation. Cette chambre de détection 3, comme dans tout compteur hydraulique ou de gaz, comporte une turbine non représentée d'axe T dont on détecte la rotation pour obtenir un signal significatif de la circulation du fluide dans la canalisation 3a, 3b. A cet effet par exemple, la turbine peut comporter un aimant permanent qui lors de sa rotation passe devant un détecteur approprié (interrupteur ILS, cellule électromagnétique...) ou un enroulement d'une génératrice de courant.

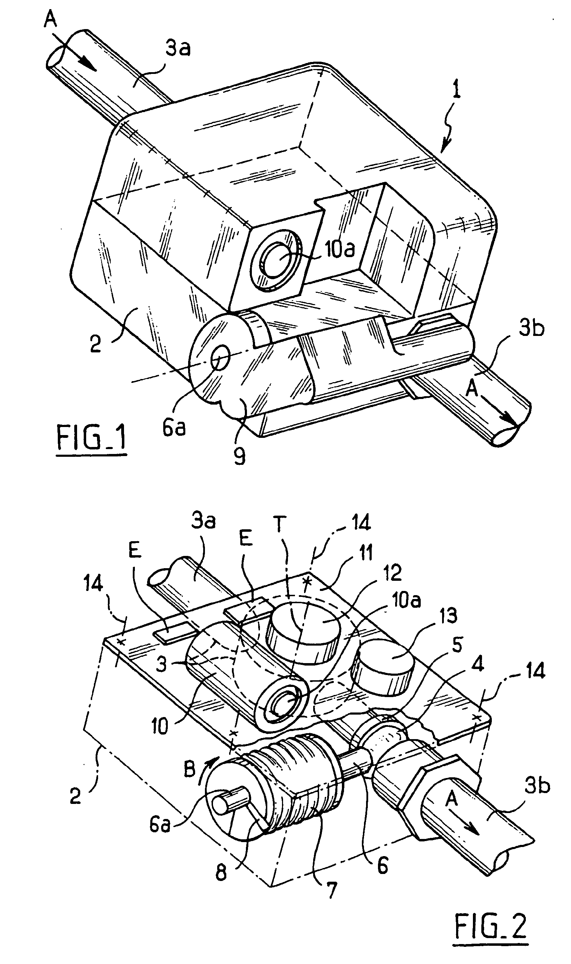

Conformément à l'invention, le corps 2 comporte également un organe d'obturation formé essentiellement par un boisseau sphérique 4, ici placé à la sortie 5 de la chambre de détection 3 au regard du sens A de circulation du fluide dans la canalisation. La manoeuvre de ce boisseau sphérique 4, représenté à la figure 2 dans sa position d'ouverture de la canalisation, est réalisée au moyen d'une clé rotative 6 qui s'étend perpendiculairement à la canalisation 3a, 3b et qui est accessible par une extrémité 6a depuis l'extérieur du corps 2. Cette clé 6 est soumise en permanence à l'effet d'un ressort hélicoïdal 7 également logé dans le corps 2, qui tend à la placer dans sa position de fermeture de la canalisation, c'est-à-dire qui tend à faire tourner le boisseau 4 d'un quart de tour dans le sens horaire B noté à la figure 2. A son extrémité 6a, la clé 6 possède des moyens 8 pour y caler angulairement un levier 9 de manoeuvre de cette clé, représenté à la figure 1 dans une position intermédiaire proche de la position de fermeture de l'organe d'obturation 4.

Ce levier 9 s'étend à l'extérieur du corps 2 de manière à être accessible par un opérateur. Il constitue un organe de manoeuvre manuel du boisseau sphérique 4 de sa position d'obturation à sa position d'ouverture de la canalisation 3 à l'encontre de l'effet du ressort de rappel 7 qui tend à maintenir fermé l'organe d'obturation 4 en forçant la clé 6 contre un appui que possède de manière non représentée le corps 2.

Le levier 9 possède sur une face non visible à la figure 1 une pastille d'un matériau ferromagnétique qui, lorsque le levier est remonté dans le sens contraire au sens B susdit, vient au contact de la face active 10a d'une ventouse magnétique 10. La ventouse magnétique est formée de manière connue par un aimant permanent et comporte autour de cet aimant permanent un enroulement qui, lorsqu'il est parcouru par un courant, engendre un flux magnétique de neutralisation du flux magnétique permanent de l'aimant. Lorsque cette neutralisation est obtenue, le levier 9 n'est plus retenu dans la position d'ouverture du boisseau et sous l'effet du ressort 7 il bascule dans le sens B en même temps que la clé 6 tourne dans ce même sens et le boisseau ferme la canalisation.

A la figure 2 on voit que la ventouse 10 est solidaire d'un support 11, ici une plaque plane qui est rapportée sur une surface plane correspondante du corps 2. Cette surface sera avantageusement perpendiculaire à l'axe T de la turbine. Cette plaque 11 présente au droit de la chambre de détection 3 (au-dessus de celle-ci) un détecteur 12 de la rotation de la turbine qui se trouve dans cette chambre. Ce détecteur 12 peut être avantageusement formé par une génératrice de courant. Il peut être également d'une autre nature comme par exemple un interrupteur à lame souple qui réagirait, au travers d'une paroi supérieure amagnétique du corps 2, à un aimant solidaire de la partie supérieure de la turbine afin d'ouvrir ou fermer un circuit électrique et d'engendrer des impulsions significatives de la rotation de cette turbine.

Le support plan 11 peut avantageusement être constitué ou comporter un circuit imprimé sur lequel seraient montés des composants électroniques E aptes à interpréter les signaux de la turbine et à les traiter de manière à commander, en fonction d'un programme préenregistré (ASIC) ou d'un microcontrôleur programmable, la fermeture d'un circuit d'alimentation de l'enroulement de neutralisation de la ventouse. Cette fermeture se ferait d'une manière extrêmement brève, ce qui suffirait à provoquer une impulsion magnétique contraire au champ permanent de la ventouse, impulsion de durée suffisante pour que le levier soit écarté de cette ventouse par le ressort 7. Dans ces conditions, la consommation électrique du dispositif de l'invention est extrêmement faible, et la source d'énergie dont le coupe-circuit a besoin peut être constituée par une batterie 13 qui repose également sur le support 11. Dans le cas où le détecteur 12 est l'enroulement d'une génératrice, la batterie 13 sera une batterie rechargeable.

Grâce à cette architecture, on comprend que les pièces mécaniques et hydrauliques sont tout-à-fait indépendantes des pièces électriques et électroniques. La fabrication de chacune de ces deux parties du coupe circuit peut être réalisée indépendamment de l'autre. La réalisation complète du coupe-circuit ne demande qu'un assemblage du support 11 qui forme une unité au corps 2 au moyen d'organes d'assemblages représentés schématiquement en 14.

Bien entendu, pour des raisons d'esthétique, on finira le montage par un capotage du style de celui 15 représenté à la figure 1, capotage qui peut prendre en compte une partie d'ailleurs du corps 2 ou, dans une autre réalisation, le support 11 et le capot 15 peuvent être assemblés de leur côté et l'unité ainsi formée rapportée sur le corps 2 au moyen d'éléments de fixation qui seraient par exemple accessibles du côté de la face inférieure du corps 2, non visible aux figures.

Comme dans tout appareil électrique faiblement consommateur, le coupe-circuit de l'invention pourra comporter des témoins de charge de la batterie 13 afin d'alerter l'utilisateur et de le renseigner sur le niveau de cette charge.

## Revendications

1. Coupe-circuit pour canalisation (3a, 3b) de fluide liquide ou gazeux comprenant :
- une chambre de détection (3) de débit avec un orifice d'entrée, un orifice de sortie (5) et une turbine située entre ces deux orifices,
- un organe d'obturation (4) d'au moins l'un (5) des deux orifices de la chambre de détection, cet organe (4) étant mobile entre une première position d'ouverture du canal (3) et une seconde position de fermeture de ce dernier,
- des moyens (6, 7, 9) comportant un levier (9) de manoeuvre de l'organe d'obturation (4) pour le faire passer de l'une vers l'autre de ses positions et des moyens de maintien de cet organe (4) dans l'une et l'autre de ses positions,
- un détecteur (12) de rotation de la turbine susdite émettant un signal électrique significatif de la grandeur d'au moins un paramètre de cette rotation,
- des moyens électroniques (E) d'interprétation de ce signal formant moyens de commande de la neutralisation d'une ventouse magnétique (10) de maintien du levier (9) de manoeuvre manuelle de l'organe d'obturation (4) dans sa position de fermeture, dans lequel
- la chambre de détection (3) et l'organe d'obturation (4) sont contenus dans un corps étanche (2) possédant des moyens pour son insertion dans une canalisation de fluide (3a, 3b), et
**caractérisé en ce que**
le détecteur (12) de rotation de la turbine, les moyens électroniques (E) d'interprétation du signal et la ventouse magnétique (10) avec un enroulement de neutralisation de son champ magnétique permanent sont solidaires d'un support (11) pour former une unité rapportée sur une surface du corps (2), laquelle unité comprend également une source (13) d'alimentation électrique de l'enroulement et des moyens électroniques.

2. Coupe-circuit selon la revendication 1, **caractérisé en ce que** le support (11) susdit est une plaque plane, le corps (2) comportant une surface extérieure plane de fixation de cette plaque qui est perpendiculaire à l'axe de la turbine (T) logé dans la chambre de détection.

3. Coupe-circuit selon l'une des revendications précédentes, **caractérisé en ce que** le corps (2) et le support (11) sont surmontés d'un capot (15) de couverture rapporté sur le corps.

4. Coupe-circuit selon la revendication 3, **caractérisé en ce que** le support et le capot sont solidaires et forment ensemble un boîtier rapporté sur le corps (2) susdit.

5. Coupe-circuit selon l'une des revendications précédentes, **caractérisé en ce que** la source d'alimentation est une batterie (13).

6. Coupe circuit selon la revendication 4, **caractérisé en ce que** la source d'alimentation comprend une génératrice de courant associée à la batterie (13) qui est rechargeable.

## Claims

1. A flow interrupter for a pipe (3a, 3b) for conveying a liquid or gaseous fluid, the interrupter comprising:
• a flow rate detector chamber (3) with an inlet orifice, an outlet orifice (5), and a spinner situated between said two orifices;
• a closure member (4) for closing at least one (5) of the two orifices of the detector chamber, the closure member (4) being movable between a first position in which the pipe (3a, 3b) is open and a second position in which it is closed;
• means (6, 7, 9) including a lever (9) for driving the closure member (4) to cause it to move between its positions, and means for holding the member (4) in each of its positions;
• a detector (12) for detecting rotation of the said spinner by emitting an electrical signal representative of the magnitude of at least one parameter of said rotation; and
• electronic means (E) for interpreting said signal and forming means for canceling the effect of a magnetic holder (10) for holding the manual control lever (9) of the closure member (4) in its closure position,
Said flow interrupter having the detector chamber (3) and the closure member (4) contained in a leaktight body (2) possessing means enabling it to be inserted in a fluid flow pipe (3a, 3b),
**characterized in that** the detector (12) for detecting rotation of the spinner, the electronic means (E) for interpreting the signal, and the magnetic holder (10) with a winding for canceling its permanent magnetic field are secured to a support (11) to form a separate unit fitted on a surface of the body (2), which unit also includes a power supply (13) for feeding electricity to the winding and the electronic means.

2. A flow interrupter according to claim 1, **characterized in that** the said support (11) is a plane plate, the body (2) having a plane outside surface on which said plate is secured, which surface is perpendicular to the axis of the spinner (T) housed in the detector chamber.

3. A flow interrupter according to either preceding claim, **characterized in that** the body (2) and the support (11) are surmounted by a covering cap (15) fitted on the body.

4. A flow interrupter according to claim 3, **characterized in that** the support and the cap are secured to each other and together form a housing that is fitted on the said body (2).

5. A flow interrupter according to any preceding claim, **characterized in that** the power supply source is a battery (13).

6. A flow interrupter according to claim 4, **characterized in that** the power supply comprises a current generator associated with the battery (13) that is rechargeable.

## Patentansprüche

1. Schutzschalter für eine Flüssigkeits- oder Gasleitung (3a, 3b), umfassend:
- eine Detektionskammer (3) zur Durchflussmengenerfassung mit einer Eintrittsöffnung, einer Austrittsöffnung (5) und einer zwischen diesen beiden Öffnungen befindlichen Turbine,
- ein Absperrorgan (4) zum Verschließen mindestens einer (5) der beiden Öffnungen der Detektionskammer, wobei dieses Organ (4) zwischen einer ersten Öffnungsstellung zum Öffnen der Leitung (3) und einer zweiten Schließstellung zum Verschließen dieser letztgenannten beweglich ist,
- Mittel (6, 7, 9), die einen Hebel (9) zum Verstellen des Absperrorgans (4) umfassen, um dieses von der einen in die andere seiner Stellungen zu verstellen, und Mittel zum Halten dieses Organs (4) in der einen und der anderen seiner Stellungen,
- einen Detektor (12) zum Erfassen einer Drehung der oben genannten Turbine, der ein elektrisches Signal abgibt, das kennzeichnend für die Größe mindestens eines Parameters dieser Drehung ist,
- elektronische Mittel (E) zum Auswerten dieses Signals, die Steuermittel zum Steuern der Neutralisierung eines Magnethalters (10) zum Halten des Hebels (9) zur manuellen Verstellung des Absperrorgans (4) in seine Schließstellung bilden, wobei
- die Detektionskammer (3) und das Absperrorgan (4) in einem dichten Gehäuse (2) enthalten sind, das Mittel für sein Einsetzen in eine Fluidleitung (3a, 3b) hat, und
**dadurch gekennzeichnet, dass**
der Detektor (12) zum Erfassen der Drehung der Turbine, die elektronischen Mittel (E) zum Auswerten des Signals und der Magnethalter (10) mit einer Wicklung zur Aufhebung seines Dauermagnetfeldes fest mit einem Träger (11) verbunden sind, um eine Einheit zu bilden, die auf einer Oberfläche des Gehäuses (2) befestigt ist, wobei die Einheit ferner eine Energiequelle (13) zur Stromversorgung der Wicklung und der elektronischen Mittel umfasst.

2. Schutzschalter nach Anspruch 1, **dadurch gekennzeichnet, dass** der oben genannte Träger (11) eine ebene Platte ist, wobei das Gehäuse (2) eine ebene Außenfläche zur Befestigung dieser Platte umfasst, die senkrecht zu der in der Detektionskammer untergebrachten Achse der Turbine (T) ist.

3. Schutzschalter nach einem der vorhergehenden Ansprüche, **dadurch gekennzeichnet, dass** über dem Gehäuse (2) und dem Träger (11) eine Abdeckhaube (15) angebracht ist, die an dem Gehäuse befestigt ist.

4. Schutzschalter nach Anspruch 3, **dadurch gekennzeichnet, dass** der Träger und die Haube fest verbunden sind und zusammen einen Kasten bilden, der an dem oben genannten Gehäuse (2) befestigt ist.

5. Schutzschalter nach einem der vorhergehenden Ansprüche, **dadurch gekennzeichnet, dass** die Energiequelle eine Batterie (13) ist.

6. Schutzschalter nach Anspruch 4, **dadurch gekennzeichnet, dass** die Energiequelle einen mit der Batterie (13) verbundenen Stromerzeuger umfasst, der wiederaufladbar ist.
